**Europäisches Patentamt**

**European Patent Office**

**Office européen des brevets**

(19)

(11) Numéro de publication : **0 383 666 B1**

(12)                    **FASCICULE DE BREVET EUROPEEN**

(45) Date de publication du fascicule du brevet :
**03.07.91 Bulletin 91/27**

(51) Int. Cl.⁵ : **H04Q 11/04, H04M 11/06, H04J 3/06**

(21) Numéro de dépôt : **90400376.1**

(22) Date de dépôt : **12.02.90**

(54) **Circuit modulaire d'interface et régie d'abonné pour réseau numérique.**

(30) Priorité : **16.02.89 FR 8902044**

(43) Date de publication de la demande :
**22.08.90 Bulletin 90/34**

(45) Mention de la délivrance du brevet :
**03.07.91 Bulletin 91/27**

(84) Etats contractants désignés :
**BE CH DE ES GB IT LI NL SE**

(56) Documents cités :
**EP-A- 0 237 106**
**EP-A- 0 316 228**
**DE-C- 3 431 420**
**US-A- 4 672 299**

(56) Documents cités :
**WESCON/87, Conference Record, session 20, paper 5 vol. 31, 1987, Los Angeles, US pages 1 - 7 ; C. STACEY : "Build your own ISDN terminal/terminal adapter"**

(73) Titulaire : **SAT (Société Anonyme de Télécommunications)**
**6, avenue d'Iéna**
**F-75116 Paris (FR)**

(72) Inventeur : **Hewko Eric, Jean-François**
**9, Rue de la Muette**
**F-91410 Dourdan (FR)**

(74) Mandataire : **Arnaud, Jean Pierre Alfred**
**Cabinet Arnaud 94 rue Saint-Lazare**
**F-75009 Paris (FR)**

## Description

La présente invention concerne la connexion des abonnés aux réseaux numériques à intégration de services qui sont destinés à remplacer les réseaux téléphoniques commutés actuels. Plus précisément, elle concerne des circuits permettant la synchronisation des équipements d'abonnés sur le réseau, lorsqu'un ensemble d'équipements est connecté au réseau par plusieurs interfaces.

Le réseau numérique à intégration de services, plus souvent désigné par son sigle RNIS et en cours de développement dans plusieurs pays, est destiné à offrir un accès intégré à un ensemble de services (voix, données, textes, images, etc) utilisant la technologie numérique dans un réseau global. Un tel réseau permet donc, par utilisation d'un type normalisé d'interface, de connecter n'importe quel équipement adapté, le réseau déterminant la réponse la plus efficace à donner aux caractéristiques techniques des appels.

L'utilisation d'un tel réseau implique la disponibilité d'une interface unique permettant de véhiculer la voix, les données, etc. Cette interface normalisée, appelée "interface S", agit à la manière d'un multiplexeur-démultiplexeur disposé entre la ligne qui a un débit de 192 kbit/s et le circuit d'abonné qui gère deux canaux $B_1$ et $B_2$ à 64 kbit/s et un canal D de contrôle à 16 kbit/s. Parmi les fonctions des interfaces, il faut aussi noter une horloge de bit, une horloge d'octet (à 8 kHz), l'alimentation en énergie (dans un sens ou dans l'autre), l'activation et la désactivation, etc.

Dans ce contexte, l'invention concerne un problème particulier de synchronisation. Ce problème est décrit de façon générale dans l'article de C. Stacey intitulé "Build your own ISDN terminal/terminal adapter" Wescon/87, Conference Record, vol. 31, 1987, session 20, papier 5, pages 1-7. Lorsqu'un abonné dispose d'une "régie" gérant des accès au réseau par plusieurs interfaces, la régie doit fonctionner par utilisation d'une "horloge interne" assurant la synchronisation de tous les équipements. Cette horloge interne est tirée de l'horloge externe provenant du réseau par les interfaces. Lorsque l'interface par l'intermédiaire de laquelle la régie est synchronisée sur le réseau est désactivée, il faut que la régie reçoive un signal de synchronisation d'une autre interface activée afin que l'horloge interne reste synchronisée sur l'horloge externe.

Pour qu'aucune information ne puisse être perdue, il faut que cette nouvelle synchronisation soit réalisée en un temps très court. En effet, bien que l'interface comporte des circuits tampons d'entrée et de sortie capables de compenser un certain écart entre les horloges interne et externe, cet écart correspond seulement à un glissement d'une vingtaine de microsecondes. La séquence d'événements commandée par le circuit de traitement de la régie (comprenant la coupure de la liaison avec une interface qui vient d'être désactivée, l'établissement d'une liaison avec une autre interface qui est activée, et le verrouillage de l'horloge interne sur l'horloge externe) nécessite un temps qui peut atteindre plusieurs centaines de millisecondes et qui est trop important pour que toute perte d'information soit évitée, surtout si plusieurs interfaces sont désactivées successivement. Le temps nécessaire à ces opérations est essentiellement dû au traitement logiciel effectué dans le circuit central de traitement de la régie. Le brevet des Etats-Unis d'Amérique n°4 672 299 décrit un exemple d'un tel traitement logiciel, dans une application différente de celle de l'invention.

Le document EP-A-0 316 228 concerne un circuit de base de temps destiné à être relié à un réseau RNIS et comportant des modules comprenant chacun plusieurs interfaces S. Le circuit comporte un module maître et des modules esclaves. Lorsque le module maître est en panne (comme indiqué par un chien de garde), le fonctionnement d'un module suivant est validé, les modules étant montés en cascade. Un module transmet un signal de synchronisation qui est soit celui de l'horloge locale lorsqu'aucune interface S n'est reliée au réseau, soit le signal d'une interface S lorsque l'une d'elles au moins est reliée au réseau. Le passage de la commande d'une interface S à une autre est assuré par un microprocesseur 19, et est donc commandé par logiciel. Les problèmes de retard dus à un tel traitement logiciel et indiqués précédemment existent aussi dans cette réalisation. La seule commande transmise uniquement par le matériel est la commande d'un module au suivant lorsque le module précédent est en panne. Cependant, ce basculement est lui-même commandé par le chien de garde qui utilise lui-même les signaux provenant du microprocesseur 19 et donc obtenus par traitement logiciel. Ce document présente donc les inconvénients décrits dans le paragraphe précédent.

Une solution serait le maintien permanent des interfaces, ou d'une au moins, à l'état activé. Cette solution est effectivement adoptée par au moins un pays, mais elle présente l'inconvénient de provoquer une consommation inutile d'énergie.

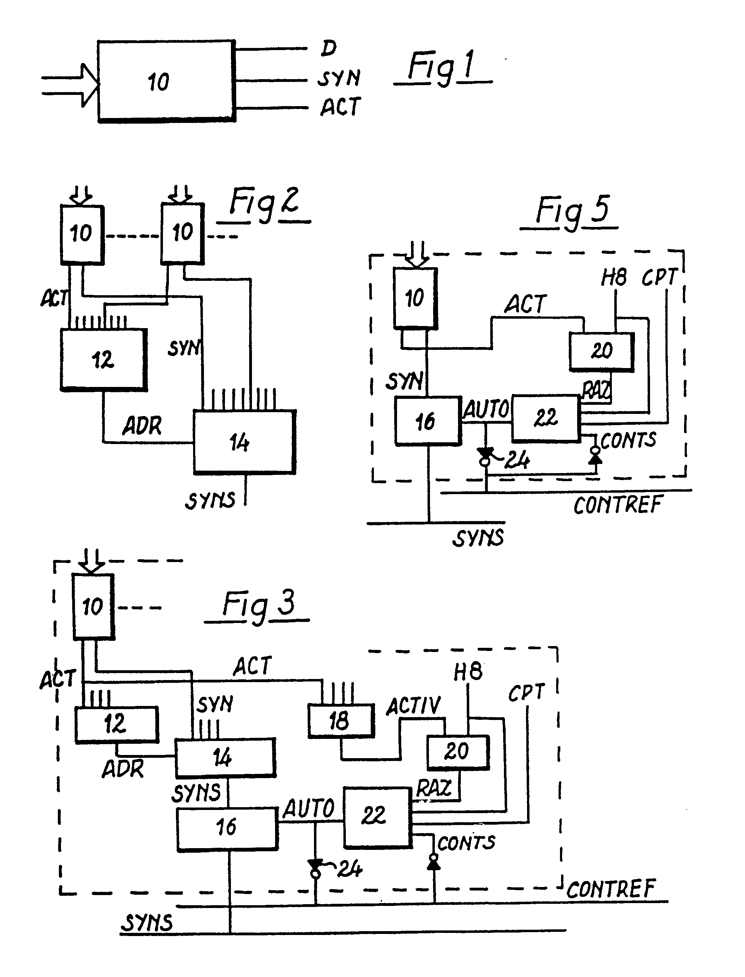

On pourrait aussi envisager une solution dans laquelle la totalité du traitement nécessaire est effectuée non pas par un logiciel, mais par le matériel. On décrit une telle solution en référence aux figure 1 et 2, la figure 1 étant un schéma très simplifié d'une interface, appelée "circuit de base" dans la suite du présent mémoire, et la figure 2 étant un diagramme synoptique d'un circuit qui pourrait être réalisé pour la résolution du problème précité.

La figure 1 indique simplement les caractéristiques utiles pour la compréhension de l'invention. On note que le circuit 10 de base reçoit différents signaux de la ligne du réseau RNIS et transmet un signal d'information D, un signal ACT indiquant son état d'activation, et un signal de synchronisation SYN représentatif de l'horloge externe (du réseau). Bien entendu, ce signal SYN n'est présent que si le circuit est activé, c'est-à-dire si le signal ACT est présent. Bien entendu, dans le présent mémoire et dans les revendications, les expressions "signal d'activation" et "signal ACT" recouvrent aussi le cas dans lequel un tel signal n'existe pas en réalité et l'état d'activation est simplement déterminé par surveillance par programme.

La figure 2 indique que plusieurs circuits de base 10 peuvent transmettre leur signaux d'activation à un circuit 12 d'adressage dont le signal de sortie ADR identifie l'un des circuits 10 qui sont activés. Il modifie cette adresse ADR lorsque le circuit dont l'adresse était désignée est passé à l'état inactif. Par ailleurs, les signaux de synchronisation SYN des circuits de base parviennent aux entrées d'un multiplexeur 14 qui reçoit le signal d'adresse ADR lui indiquant quel signal SYN d'entrée il doit transmettre comme signal résultant de synchronisation SYNS.

Etant donné la rapidité de fonctionnement des circuits d'adressage et multiplexeur, le circuit central de la régie n'est privé du signal SYNS que pendant un temps très court. Cependant, ce montage pose un problème important. En effet, il n'est pas du tout modulaire. L'addition d'un circuit de base nécessite la réalisation de connexions aux circuits d'adressage et multiplexeur qui ont eux-mêmes une capacité déterminée. Les inconvénients sont donc nombreux, dans la mesure où l'augmentation du nombre d'accès au réseau est soit impossible, soit obtenue par un surdimensionnement initial des circuits. En outre, un travail important de câblage est nécessaire.

L'invention concerne une solution au problème précité qui permet un agrandissement modulaire de la régie de l'abonné, tout en assurant une synchronisation en un temps très court. Elle met en oeuvre à cet effet un traitement essentiellement ou totalement réalisé par des circuits matériels, et un bus ayant une ligne spécialisée.

Plus précisément, l'invention concerne un circuit modulaire d'interface d'abonné destiné à être monté entre un réseau numérique à intégration de services et une régie d'abonné, caractérisé en ce qu'il comporte :
- un circuit de base connecté au réseau et ayant, en plus d'une sortie d'un signal d'information, une sortie d'un signal indiquant l'état d'activation du circuit de base et une sortie d'un signal de synchronisation tiré du réseau,
- un circuit porte ayant une entrée reliée à la sortie du signal de synchronisation du circuit de base, une entrée d'un signal d'autorisation, et une sortie d'un signal résultant de synchronisation, cette sortie ne transmettant un signal de synchronisation que lorsque l'entrée du signal d'autorisation reçoit un signal d'autorisation,

- un compteur ayant une entrée d'un signal d'horloge, une entrée d'un signal de remise à zéro, une entrée d'un signal de validation, une entrée d'un signal de comptage et une sortie d'un signal d'autorisation destiné au circuit porte, le signal de remise à zéro étant actif lorsque le signal d'activation du circuit de base indique que celui-ci est inactif, et
- une borne de contention destinée à être connectée à un circuit extérieur au circuit d'interface et connectée à l'entrée de validation du compteur afin qu'elle lui transmette un signal de validation tel que, lorsque la borne de contention est à un premier état, le signal de validation est à un état qui invalide le fonctionnement du compteur, la borne de contention étant aussi reliée à la sortie de signal d'autorisation du compteur par un dispositif unidirectionnel de manière que le signal d'autorisation du compteur, qui n'est créé que lorsque la borne de contention est à un second état, remette cette borne à son premier état.

De préférence, le circuit d'interface comporte en outre un circuit porte supplémentaire ayant une entrée reliée à la sortie de signal d'activation du circuit de base, une entrée destinée à recevoir le signal d'horloge et une sortie de signal de remise à zéro reliée à l'entrée de remise à zéro du compteur.

Il est avantageux que le circuit comporte en outre des bornes d'entrée reliées au compteur et destinées à prérégler une valeur de comptage.

Dans un exemple de réalisation, le signal d'horloge a une fréquence de 8 kHz, et le signal de comptage une fréquence de 256 kHz.

Il est avantageux que la totalité des éléments forme un circuit intégré constituant un composant unique.

Dans un autre mode de réalisation, il est avantageux que le circuit comporte
- plusieurs circuits de base connectés séparément au réseau numérique,
- un circuit d'adressage ayant des entrées de signaux d'activation en nombre au moins égal au nombre de circuits de base et une sortie d'un signal d'adressage désignant l'un des circuits de base, et
- un multiplexeur ayant un nombre d'entrées de signaux de synchronisation au moins égal au nombre de circuits de base, une entrée d'adresse reliée à la sortie de signal d'adressage du circuit d'adressage, et une sortie de signal de synchronisation reliée à l'entrée du circuit porte.

Dans ce mode de réalisation, il est avantageux que tous les éléments soient montés sur une carte unique.

L'invention concerne aussi une régie d'abonné qui comporte un circuit central de gestion, comportant un circuit d'horloge interne, destiné à former un signal d'horloge interne synchronisé sur le réseau à partir d'un signal de synchronisation, au moins deux circuits modulaires d'interface selon l'invention, un seul circuit d'interface au plus transmettant un signal de synchronisation au circuit central à un moment quelconque, et un bus reliant le circuit central à tous les circuits modulaires et comprenant notamment une ligne d'horloge interne, une ligne de signal de synchronisation et une ligne de contention destinée à être reliée aux bornes de contention des circuits modulaires.

D'autres caractéristiques et avantages de l'invention ressortiront mieux de la description qui va suivre, faite en référence aux dessins annexés sur lesquels, les figures 1 et 2 ayant déjà été décrites :

la figure 1 est un schéma d'un circuit connu d'interface d'abonné utilisé dans le circuit modulaire d'interface selon l'invention ;

la figure 2 est un diagramme synoptique d'un circuit d'interface non modulaire de la technique antérieure ;

la figure 3 est un diagramme synoptique d'un circuit modulaire d'interface selon l'invention, dans lequel chaque module est destiné à gérer plusieurs interfaces ;

la figure 4 est un diagramme synoptique plus détaillé du circuit de la figure 3 ;

la figure 5 est un diagramme synoptique d'un circuit modulaire d'interface selon l'invention dans lequel chaque module est destiné à gérer une seule interface ; et

la figure 6 est un diagramme des temps illustrant le fonctionnement d'un circuit modulaire d'interface selon l'invention.

La figure 3 est un diagramme synoptique d'un exemple de carte modulaire d'interface selon l'invention. Dans le mode de réalisation considérée, la régie d'abonné est modulaire parce qu'elle peut comporter plusieurs cartes ayant chacune une ou plusieurs interfaces ou "circuits de base" 10.

Comme déjà décrit en référence à la figure 2, les circuits de base 10 ont leur sortie d'activation ACT reliée à une entrée d'un circuit d'adressage 12 et leur sortie de synchronisation SYN reliée à une entrée d'un multiplexeur 14. L'adresse ADR du circuit d'adressage 12 détermine le signal de synchronisation SYNS qui est transmis par le multiplexeur 14.

Dans la carte selon l'invention, qui comprend par exemple quatre circuits de base 10, ce signal SYNS n'est par directement transmis au circuit central de la régie d'abonné, mais passe au contraire dans un circuit porte 16. Celui-ci est ouvert ou fermé par un signal d'autorisation AUTO formé de la manière suivante.

Plus précisément, les signaux ACT des circuits de base parviennent aux entrées d'un circuit porte OU 18 qui a un nombre d'entrées au moins égal au nombre de circuits de base. Le signal de sortie ACTIV de ce circuit porte parvient à un circuit porte ET 20 qui reçoit aussi un signal d'horloge H8, de préférence à 8 kHz. Le signal RAZ de sortie du circuit porte 20 parvient à une entrée de remise à zéro d'un compteur 22. Ce signal de remise à zéro RAZ est actif lorsque le signal ACTIV indique qu'aucun circuit de base n'est activé et au moment d'une impulsion d'horloge H8. Le compteur reçoit aussi directement le signal d'horloge H8 à une entrée de déclenchement du comptage. Il reçoit aussi un signal de comptage CPT, par exemple à une fréquence de 256 kHz. Il reçoit aussi, à une entrée supplémentaire, un signal de contention CONTS représentatif de l'état logique d'une ligne de bus CONTREF. Cette dernière entrée est une entrée de "validation". Son rôle est d'interdire le comptage dans le compteur 22 lorsque l'état logique de la ligne de bus CONTREF indique que le circuit central de la régie reçoit déjà un signal de synchronisation.

La sortie du compteur transmet un signal d'autorisation AUTO commandant l'ouverture de la porte 16 et qui est transmis, par un dispositif 24 à conduction unidirectionnelle, à la ligne de bus CONTREF.

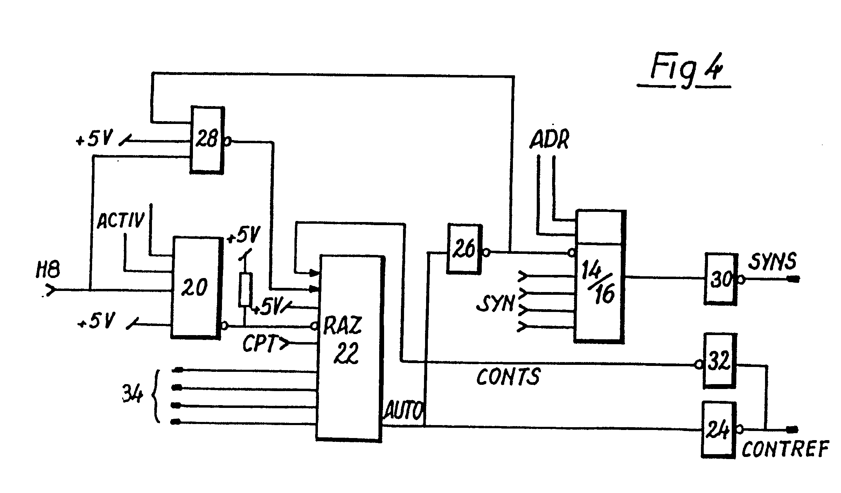

On décrit maintenant, en référence à la figure 4, la réalisation pratique d'un circuit tel que représenté sur la figure 3. On a utilisé les mêmes références que sur la figure 3 pour désigner les éléments analogues. On note cependant que le multiplexeur 14 et la porte 16 ont été regroupés en un seul composant. En outre, on note que le signal d'autorisation AUTO n'est transmis à ce circuit porte que par l'intermédiaire d'un circuit de transmission unidirectionnelle 26. Le signal d'autorisation est alors transmis à un circuit porte supplémentaire 28 qui reçoit aussi le signal d'horloge H8. Le signal d'horloge H8 n'est donc transmis au compteur que par l'intermédiaire du circuit porte 28. Ce circuit évite la formation d'un nouveau signal d'autorisation juste après la création d'un signal précédent d'autorisation. Les références 30 et 32 désignent des circuits de transmission unidirectionnelle, et la référence 34 des bornes supplémentaires d'adressage de la carte. Celles-ci permettent un préréglage de la valeur de comptage.

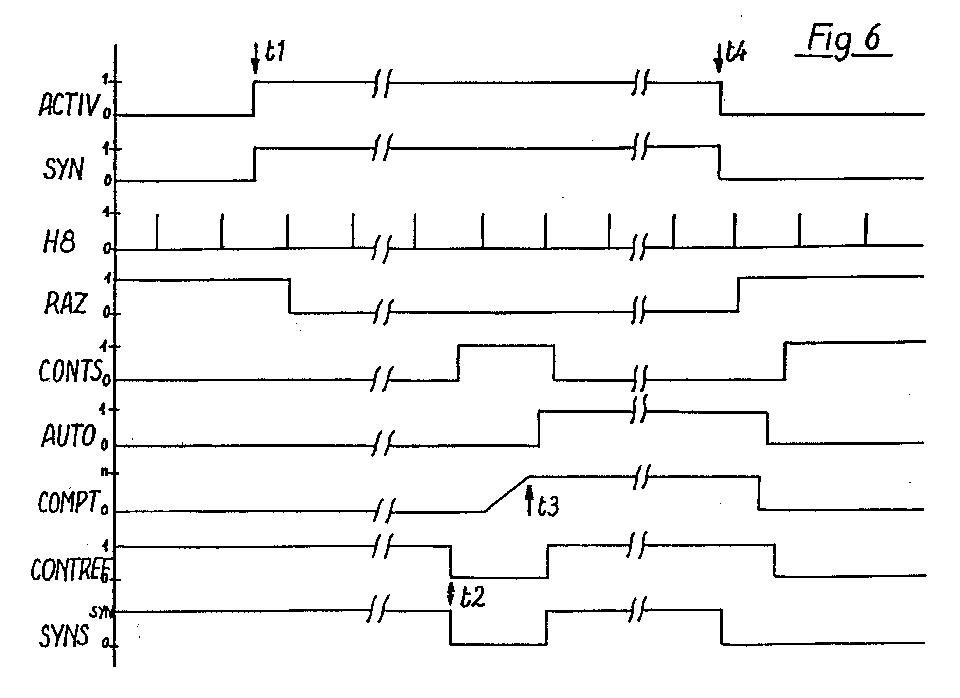

On considère maintenant, en référence à la figure 6, trois opérations différentes du circuit représenté sur la figure 3. La première de ces opérations est le passage de la carte de l'état dans lequel aucun des circuits de base n'est activé à l'état dans lequel au moins un circuit de base est activé. La seconde opération est celle au cours de laquelle, alors qu'au moins un circuit de base est activé, le signal de synchronisation utilisé par la régie et provenant d'une autre carte disparaît à la suite de l'inactivation du circuit de base correspondant. La troisième opération correspond au passage de la carte de l'état dans lequel elle transmet le signal de synchronisation au circuit central de la régie à l'état dans lequel aucun de ses circuits de base n'est activé.

Avant la première opération, aucun des circuits de base de la carte représentée sur la figure 3 n'est activé. Les signaux ACTIV et SYN sont donc à zéro, et le signal de remise à zéro RAZ est à un. Le signal d'autorisation est inactif, c'est-à-dire à zéro. On suppose que la régie reçoit un signal de synchronisation SYNS et en conséquence que la ligne de bus de contention CONTREF est à l'état un. En conséquence, le signal CONTS arrive à l'entrée de validation et est à l'état zéro et empêche le fonctionnement du compteur.

Au temps t1, un circuit de base au moins passe à l'état activé. En conséquence, les signaux ACTIV et SYN changent d'état. Lors de l'impulsion suivante du signal d'horloge H8, le signal RAZ change d'état. Cependant, le compteur 22 ne reçoit pas de signal de validation et il ne compte donc pas.

Avant la seconde opération, les signaux ACTIV et SYN sont donc présents. Le fait que le circuit central de la régie ne reçoit plus de signal de synchronisation apparaît au temps t2 par changement d'état du bus CONTREF qui passe à zéro. En conséquence, le signal de validation ou de contention CONTS passe à un et valide donc le fonctionnement du compteur. Lors de l'apparition de l'impulsion suivante du signal d'horloge H8, le comptage est alors déclenché et se poursuit jusqu'à ce qu'un nombre préréglé soit atteint (temps t3). A ce moment, le signal d'autorisation est créé et il provoque la mise à un du signal du bus de contention CONTREF et la transmission du signal de synchronisation SYNS. Dès que le signal CONTREF est passé à un, le signal CONTS retombe à zéro et le compteur ne peut plus continuer à compter.

Cette seconde opération a donc permis à la carte de se charger de la transmission des signaux de synchronisation au circuit central de la régie. Cet état se maintient alors jusqu'à la troisième opération.

La troisième opération commence au temps t4 auquel le dernier circuit de base activé de la carte est désactivé. Les signaux ACTIV et SYN passent à zéro au temps t4. A l'impulsion suivante d'horloge H8, le signal de remise à zéro RAZ redevient actif. Il provoque la remise à zéro du compteur et la suppression du signal d'autorisation. La suppression du signal AUTO fait passer la ligne de bus CONTREF à zéro, si bien que le signal de validation CONTS passe à un. Cependant, comme aucun circuit de base n'est activé, l'ensemble de la carte reste inactif.

Les signaux précédents ont été décrits lorsque le signal de la bascule qui est utilisé est le signal de la sortie Q. Bien entendu, on peut utiliser le signal de la sortie Q̄, les états de différents signaux (ACTIV par exemple) changeant en conséquence.

On a décrit une réalisation particulière dans laquelle le compteur reçoit quatre signaux séparés. Cependant, certaines fonctions peuvent être divisées. Par exemple, un circuit porte peut recevoir deux des signaux d'entrée et transmettre un signal résultant au compteur.

On a décrit, en référence à la figure 3, une carte de circuit comportant plusieurs circuits de base, quatre par exemple, permettant la réalisation d'une régie modulaire dans laquelle des cartes peuvent être ajoutées en fonction des besoins. Cependant, l'invention s'applique au cas où une telle "carte" ne comporte qu'un seul circuit de base. Dans ce cas, la totalité du circuit peut être réalisée sous forme d'un seul composant, de préférence un circuit intégré unique. La figure 5 représente un tel mode de réalisation.

Sur la figure 5, les références identiques à celles des figures précédentes désignent des éléments dont le rôle est analogue à celui des éléments correspondants décrits en référence aux figures précédentes. Les circuits d'adressage et de multiplexage 12 et 14 et le circuit porte 18 sont inutiles puisqu'il n'existe qu'un seul circuit de base 10 transmettant un seul signal de synchronisation SYN et un seul signal d'activation ACT. Le circuit porte 20, le compteur 22, le circuit unidirectionnel 24 et le circuit porte 16 jouent le même rôle que dans le circuit de la figure 3. On ne les décrit donc pas plus en détail, d'autant que leur fonctionnement est identique à celui qu'on a décrit en référence à la figure 6. Cependant, il faut noter que, dans ce cas, tous les éléments peuvent être formés par un seul circuit intégré. En conséquence, il suffit que le circuit central de la régie d'abonné soit formé sur une carte unique comportant des connecteurs permettant le montage de circuits supplémentaires tel que représenté sur la figure 5, au fur et à mesure des besoins.

Dans ce mode de réalisation, l'identification des différents modules peut être assurée initialement par une programmation, directe ou indirecte, du module par le circuit central de traitement. Le module comporte alors un registre programmé par le circuit central afin qu'il contienne une adresse de module ou, plus précisément, un niveau de priorité d'accès au bus.

Dans une variante, on peut obtenir un résultat analogue par surveillance du bus SYN, l'adresse étant déduite du temps pendant lequel le bus SYN ne présente plus d'activité avant que le module puisse occuper le bus SYN.

Etant donné que l'ensemble des opérations est réalisé par des circuits matériels, sans traitement logiciel, le temps nécessaire aux opérations décrites précédemment est extrêmement bref, et il est inférieur d'au moins d'un facteur cent au temps nécessaire au traitement logiciel. En conséquence, aucune perte d'information n'est à craindre, lorsque la synchronisation change d'interface.

Dans une variante, une partie des opérations (par exemple les fonctions des circuits d'adressage et de multiplexage) peut être réalisée par un microprocesseur présent sur la carte de la figure 3 ou 4. La perte de temps est relativement faible, car le traitement simple est exécuté sur place. Ainsi, le signal ACTIV et éventuellement le signal ADR peuvent être gérés par logiciel, sous interruption, avec une très faible perte de temps. Par contre, les sélections d'horloge sont toujours matérielles.

L'invention concerne aussi une régie d'abonné qui comprend un circuit central et un ou plusieurs circuits modulaires d'interface selon l'invention. Le circuit central comporte une boucle à verrouillage de phase capable de créer l'horloge interne à partir du signal de synchronisation SYNS qu'elle reçoit.

Ainsi, l'invention concerne une régie d'abonné qui est réellement modulaire, soit au niveau de cartes, soit au niveau de chaque interface. Cela signifie que, lorsqu'une régie d'abonné doit comporter un plus grand nombre d'accès au réseau, aucun câblage supplémentaire n'est nécessaire car il suffit d'enficher une carte supplémentaire ou un composant supplémentaire.

## Revendications

1. Circuit modulaire d'interface d'abonné destiné à être monté entre un réseau numérique et une régie d'abonné, caractérisé en ce qu'il comporte :
   – un circuit (10) de base connecté au réseau et ayant, en plus d'une sortie d'un signal d'information, une sortie d'un signal indiquant l'état d'activation du circuit de base et une sortie d'un signal de synchronisation tiré du réseau,
   – un circuit porte (16) ayant une entrée reliée à la sortie du signal de synchronisation du circuit de base, une entrée d'un signal d'autorisation, et une sortie d'un signal résultant de synchronisation, cette sortie ne transmettant un signal de synchronisation que lorsque l'entrée du signal d'autorisation reçoit un signal d'autorisation,
   – un compteur (22) ayant une entrée d'un signal d'horloge, une entrée d'un signal de remise à zéro, une entrée d'un signal de validation, une entrée d'un signal de comptage et une sortie d'un signal d'autorisation destiné au circuit porte, le signal de remise à zéro étant actif lorsque le signal d'activation du circuit de base indique que celui-ci est inactif,
   – une borne de contention destinée à être connectée à un circuit extérieur au circuit d'interface et connectée à l'entrée de validation du compteur afin qu'elle lui transmette un signal de validation tel que, lorsque la borne de contention est à un premier état, le signal de validation est à un état qui invalide le fonctionnement du compteur, la borne de contention étant aussi reliée à la sortie de signal d'autorisation du compteur par un dispositif unidirectionnel de manière que le signal d'autorisation du compteur, qui n'est créé que lorsque la borne de contention est à un second état, remette cette borne à son premier état.

2. Circuit selon la revendication 1, caractérisé en ce qu'il comporte en outre un circuit porte supplémentaire (20) ayant une entrée reliée à la sortie de signal d'activation du circuit de base, une entrée destinée à recevoir le signal d'horloge et une sortie de signal de remise à zéro reliée à l'entrée de remise à zéro du compteur.

3. Circuit selon l'une des revendications 1 et 2, caractérisé en ce qu'il comporte en outre des bornes d'entrée (34) reliées au compteur et destinées à prérégler une valeur de comptage.

4. Circuit selon l'une quelconque des revendications 1 à 3, caractérisé en ce que la totalité des éléments forme un circuit intégré constituant un composant unique.

5. Circuit selon l'une quelconque des revendications 1 à 3, caractérisé en ce qu'il comporte
   – plusieurs circuits de base (10) connectés séparément au réseau numérique,
   – un circuit d'adressage (12) ayant des entrées de signaux d'activation en nombre au moins égal au nombre de circuits de base et une sortie d'un signal d'adressage désignant l'un des circuits de base, et
   – un multiplexeur (14) ayant un nombre d'entrées de signaux de synchronisation au moins égal au nombre de circuits de base, une entrée d'adresse reliée à la sortie de signal d'adressage du circuit d'adressage, et une sortie de signal de synchronisation reliée à l'entrée du circuit porte.

6. Circuit selon la revendication 5, caractérisé en ce que tous les éléments sont montés sur une carte unique.

7. Circuit selon l'une quelconque des revendications précédentes, caractérisé en ce que le signal d'horloge a une fréquence de 8 kHz, et le signal de comptage une fréquence de 256 kHz.

8. Régie d'abonné, caractérisée en ce qu'elle comporte un circuit central de traitement, comportant un circuit d'horloge interne destiné à former un signal d'horloge interne synchronisé sur le réseau à partir d'un signal de synchronisation, au moins deux circuits modulaires d'interface selon l'une quelconque des revendications précédentes, un seul circuit d'interface au plus transmettant un signal de synchronisation au circuit central à un moment quelconque, et un bus reliant le circuit central à tous les circuits modulaires et comprenant notamment une ligne d'horloge interne, une ligne de signal de synchronisation (SYNS) et une ligne de contention (CONTREF) destinée à être reliée aux bornes de contention des circuits modulaires.

9. Régie selon la revendication 8, caractérisée en ce que le circuit d'horloge interne comporte une boucle à verrouillage de phase.

## Ansprüche

1. Modulare Interface-Schaltung von Teilnehmern zur Anordnung zwischen ein digitales Netz und einer Teilnehmeranordnung, dadurch gekennzeichnet, daß sie folgende Bestandteile enthält:
   - eine mit dem Netz verbundene Grundschaltung (10) und zusätzlich mit einem Ausgang für ein Informationssignal, einem Ausgang für ein Signal, das den Betriebszustand der Grundschaltung anzeigt und einem Ausgang für ein aus dem Netz gezogenes Synchronisationssignal,
   - eine Gatterschaltung (16) mit einem mit dem Ausgang für das Synchronisationssignal der Grundschaltung verbundenen Eingang, einem Eingang eines Berechtigungssignals und einem Ausgang für ein aus der Synchronisation resultierendes Signal, wobei der Ausgang nur dann ein Synchronisationssignal weiterleitet, wenn der Eingang für das Berechtigungssignal ein Berechtigungssignal empfängt,
   - einen Zähler (22) mit einem Eingang für ein Taktsignal, einem Eingang für ein Signal zum Zurücksetzen auf Null, einem Eingang für ein Gültigkeitssignal, einem Eingang für ein Zählsignal und einem Ausgang für ein Berechtigungssignal, das für die Gatterschaltung bestimmt ist, wobei das Signal zum Zurücksetzen auf Null aktiv ist, wenn das Betriebszustandssignal der Grundschaltung anzeigt, daß diese inaktiv ist,
   - einen Stillsetzanschluß zur Verbindung mit einer Schaltung außerhalb der Interface-Schaltung und zur Verbindung mit dem Zählereingang für das Gültigkeitssignal, so daß der Stillsetzanschluß dem Zähler ein Gültigkeitssignal derart zuführt, daß das Gültigkeitssignal in einem Zustand ist, der das Funktionieren des Zählers unmöglich macht, wenn sich der Stillsetzanschluß in einem ersten Zustand befindet, und wobei der Stillsetzanschluß auch mit dem Ausgang für das Berechtigungssignal des Zählers über eine in eine Richtung wirkende Vorrichtung derart verbunden ist, daß das Berechtigungssignal des Zählers, das nur dann erzeugt wird, wenn sich der Stillsetzanschluß in einem zweiten Zustand befindet, diesen Stillsetzanschluß in seinen ersten Zustand zurücksetzt.

2. Schaltung nach Anspruch 1, dadurch gekennzeichnet, daß sie ferner eine zusätzliche Gatterschaltung (20) enthält, mit einem mit dem Ausgang für das Betriebszustandssignal der Basisschaltung verbundenen Eingang, einen Eingang zum Empfang des Taktsignals und mit einem Ausgang für das Signal zum Zurücksetzen auf Null, der mit dem Eingang zum Zurücksetzen auf Null des Zählers verbunden ist.

3. Schaltung nach einem der Ansprüche 1 und 2, dadurch gekennzeichnet, daß sie außerdem Eingangsanschlüsse (34) enthält, die mit dem Zähler verbunden sind und zur Voreinstellung des Zählwertes dienen.

4. Schaltung nach einem der Ansprüche 1 bis 3, dadurch gekennzeichnet, daß die Gesamtheit der Elemente eine, eine einzigartige Zusammensetzung bildende integrierte Schaltung darstellt.

5. Schaltung nach einem der Ansprüche 1 bis 3, dadurch gekennzeichnet, daß sie folgende Bestandteile enthält:
   - mehrere einzeln mit dem digitalen Netz verbundene Grundschaltungen (10),
   - eine Adressschaltung (12) mit Eingängen für Betriebszustandssignale, die in ihrer Anzahl wenigstens der Anzahl der Grundschaltungen entsprechen und mit einem Ausgang für ein Adressignal, das eine der Grundschaltungen bestimmt und
   - eine Multiplexschaltung (14) mit einer Anzahl von Eingängen für Synchronisationssignale, die wenigstens der Anzahl der Grundschaltungen entsprechen, einem Adresseingang, der mit dem Ausgang für das Adressignal der Adressschaltung verbunden ist und mit einem Ausgang für das Synchronisationssignal, der mit dem Eingang der Gatterschaltung verbunden ist.

6. Schaltung nach Anspruch 5, dadurch gekennzeichnet, daß alle Elemente auf einer einzigen Karte angeordnet sind.

7. Schaltung nach einem der vorhergehenden Ansprüche, dadurch gekennzeichnet, daß das Taktsignal eine Frequenz von 8 kHz und das Zählsignal eine Frequenz von 256 kHz aufweisen.

8. Teilnehmeranordnung, dadurch gekennzeichnet, daß sie eine zentrale Verarbeitungsschaltung aufweist, enthaltend eine Schaltung für eine interne Uhr zur Erzeugung eines internen Taktsignals, das ab einem Synchronisationssignal im Netz synchronisiert ist, wenigstens zwei modulare Interface-Schaltungen gemäß einem der vorhergehenden Ansprüche, eine einzige zusätzliche Interface-Schaltung zur Übermittlung eines Synchronisationssignals an die zentrale Schaltung zu irgendeinem Moment, und ein Verbindungsweg, der die zentrale Schaltung mit allen modularen Schaltungen verbindet und insbesondere enthaltend eine Leitung der inneren Uhr, eine Leitung des Synchronisationssignals (SYNS) und eine Leitung zur Stillsetzung (CONTREF) zur Verbindung mit den Stillsetzungsanschlüssen der modularen Schaltungen.

9. Teilnehmeranordnung nach Anspruch 8, dadurch gekennzeichnet, daß die Schaltung für die interne Uhr eine Phasenverriegelungsschleife enthält.

## Claims

1. A modular subscriber interface circuit for connection between a digital network and a subscriber network termination, the interface circuit being characterized in that it comprises :

a base circuit (10) connected to the network and having, in addition to an information signal output, an output for a signal indicating the activation state of the base circuit and an output for a synchronization signal taken from the network ;

a gate circuit (16) having an input connected to the synchronization signal output of the base circuit, an input for an authorization signal, and an output for a signal resulting from synchronization, said output transmitting a synchronization signal only when the authorization signal input receives an authorization signal ;

a counter (22) having an input for a clock signal, an input for a clear signal, an input for an enable signal, an input for a count signal, and an output for an authorization signal for said gate circuit, the clear signal being active when the activation signal of the base circuit indicates that the base circuit is inactive ; and

a collision terminal for connection to a circuit external to the interface circuit and connected to the enable input of the counter to transmit an enable signal thereto such that, when the collision terminal is in a first state, the enable signal is in a state that prevents counter operation, the collision terminal being also connected to the authorization signal output of the counter via a one-way device in such a manner that the authorization signal of the counter which is created only when the collision terminal is in a second state restores said terminal to its first state.

2. A circuit according to claim 1, characterized in that it further includes an additional gate circuit (20) having an input connected to the activation signal output from the base circuit, an input for receiving the clock signal, and an output for the clear signal connected to the clear input of the counter

3. A circuit according to claim 1 or 2, characterized in that it further includes input terminals (34) connected to the counter for preadjusting a count value.

4. A circuit according to any one of claims 1 to 3, characterized in that all of its parts form an integrated circuit constituting a single component.

5. A circuit according to any one of claims 1 to 3, characterized in that it includes :

a plurality of base circuits (10) separately connected to the digital network ;

an addressing circuit (12) having at least as many activation signal inputs as there are base circuits, and an address signal output designating one of the base circuits ; and

a multiplexer (14) having at least as many synchronization signal inputs as there are base circuits, and address inputs connected to the address signal output of the addressing circuit, and a synchronization signal output connected to the input of the gate circuit.

6. A circuit according to claim 5, characterized in that all of its parts are mounted on a single card.

7. A circuit according to any preceding claim, characterized in that the clock signal has a frequency of 8 kHz and the counting signal has a frequency of 256 kHz.

8. A subscriber network termination characterized in that it includes a central processor circuit including an internal clock circuit for delivering an internal clock signal synchronized on the network on the basis of the synchronization signal, at least two modular interface circuits according to any preceding claim, a single interface circuit at most transmitting a synchronization signal to the central circuit at any given moment, and a bus connecting the central circuit to all of the modular circuits and comprising, in particular : an internal clock line, a synchronization signal line (SYNS), and a collision line (CONTREF) for connection to the collision terminals of the modular circuits.

9. A network termination according to claim 8, characterized in that the internal clock circuit includes a phase locked loop.

EP 0 383 666 B1

Fig 1

Fig 2

Fig 5

Fig 3

9

Fig 4

EP 0 383 666 B1

Fig 6

EP 0 383 666 B1